# EUROPÄISCHE PATENTANMELDUNG

(11) **EP 2 559 974 A1**
(43) Veröffentlichungstag der Anmeldung: **20.02.2013**
(21) Anmeldenummer: 12005914.2
(22) Anmeldetag: 16.08.2012
(51) Int. Cl.: G01F 1/684

(54) **Thermischer Durchflusssensor**

(30) Priorität: 17.08.2011 DE 102011110882
(71) Anmelder: Sensus Spectrum LLC, Raleigh NC 27615 (US)
(72) Erfinder: Schäfer, Burghard, 67112 Mutterstadt (DE); Chu, Anh Tuan, 67071 Ludwigshafen (DE)
(74) Vertreter: Schwertfeger, Astrid

(57) **Zusammenfassung**

Die vorliegende Erfindung betrifft einen thermischen Durchflusssensor zur Messung des Durchflusses eines Fluids mit einem Heizelement und einem Messelement, wobei das Heizelement und das Messelement auf einem Halbleiterchip angeordnet und thermisch miteinander gekoppelt sind, wobei das Messelement von dem Heizelement erwärmbar ist und wobei das Heizelement und das Messelement mit geringem Abstand voneinander angeordnet auf dem Halbleiterchip monolithisch integriert sind, das Heizelement ein temperaturabhängiger niederohmiger Widerstand und das Messelement ein temperaturabhängiger hochohmiger Widerstand ist.

## Beschreibung

Die Erfindung betrifft einen thermischen Durchflusssensor zur Messung des Durchflusses eines Fluids nach dem Oberbegriff des Anspruchs 1.

Thermische Durchflusssensoren wie sie beispielsweise in thermischen Anemometern verwendet werden, sind bereits bekannt und beruhen auf der Abkühlung beheizter Strukturen durch die mit dieser Struktur in Kontakt stehenden strömenden Medien. Die Abkühlung der beheizten Strukturen hängt dabei von der Strömungsgeschwindigkeit des Mediums ab.

Es gibt eine Reihe verschiedener Verfahren, um aus dem Aufheiz- bzw. Abkühlverhalten der beheizten Strukturen Rückschlüsse auf die Strömungsgeschwindigkeit eines strömenden Fluids zu ziehen.

Unter anderem kann mittels sogenannter Diffusionsverfahren, bei denen ein Heizwiderstand und ein Temperaturwiderstand thermisch gekoppelt sind, die Strömungsgeschwindigkeit eines strömenden Fluids bestimmt werden.

Beispielsweise sind bei einem aus der DE 199 63 966 A1 bekannten Anemometer ein Heizwiderstand und ein Temperaturfühlerwiderstand auf einem gemeinsamen Sensor-Chip aus elektrisch isolierendem Material vorgesehen. Der Heizwiderstand und der Temperaturfühlerwiderstand sind thermisch miteinander gekoppelt. Der Heizwiderstand ist in einer Dickschichttechnik aufgebracht und der Temperaturfühlerwiderstand in einer Dünnfilmtechnik. Das in der DE 199 63 966 A1 genannte Verfahren zur Herstellung eines thermischen Anemometers mit einem Heizwiderstand und einem Temperaturfühlerwiderstand, die thermisch gekoppelt sind, ist jedoch sehr aufwändig.

Es ist Aufgabe der vorliegenden Erfindung, ein gattungsgemäßes Anemometer bereitzustellen, das einfach herzustellen ist, eine hohe Messgenauigkeit aufweist und darüber hinaus für einen Batteriebetrieb geeignet ist.

Erfindungsgemäß wird diese Aufgabe gelöst durch einen thermischen Durchflusssensor zur Messung des Durchflusses eines Fluids mit einem Heizelement und einem Messelement, wobei das Heizelement und das Messelement auf einem Halbleiterchip angeordnet und thermisch miteinander gekoppelt sind, wobei das Messelement von dem Heizelement erwärmbar ist und wobei das Heizelement und das Messelement mit geringem Abstand voneinander angeordnet, auf dem Halbleiterchip monolithisch integriert sind, das Heizelement ein temperaturabhängiger niederohmiger Widerstand und das Messelement ein temperaturabhängiger hochohmiger Widerstand ist.

Mit Hilfe bekannter Halbleitertechnologien lassen sich das Heizelement und das Messelement auf einfache Weise in geringem Abstand voneinander anordnen. Das Heizelement und das Messelement können sehr klein gestaltet werden, so dass sie eine geringe Wärmekapazität aufweisen. Sie können somit vergleichsweise schnell auf Temperaturänderungen reagieren, was schließlich zu sehr präzisen Messergebnissen führt.

Um die benötigte Energiemenge zur Messung der Strömungsgeschwindigkeit möglichst gering zu halten, ist das Heizelement als temperaturabhängiger niederohmiger Widerstand ausgebildet. Ein präzises Messergebnis über einen vergleichsweise großen Durchflussbereich wird dadurch erzielt, dass das Messelement ein temperaturabhängiger hochohmiger Widerstand ist.

Bei einer bevorzugten Ausführungsform liegt der Abstand zwischen dem Heizelement und dem Messelement im Bereich von etwa 10 bis 30 µm. Hierbei ist eine thermische Kopplung zwischen Heizelement und Messelement gegeben, ohne eine elektrische Kopplung zu erhalten.

Für einen stromsparenden Betrieb, z. B. für den Einsatz von Batterien, ist es bevorzugt, dass das Heizelement mit gepulstem Strom beaufschlagt wird.

Bei einer bevorzugten Ausführungsform der Erfindung ist der Widerstand des Messelements und/oder des Heizelements mittels geeigneter Dotierung des Halbleitermaterials einstellbar.

Eine besonders niedrige Wärmekapazität und damit ein besonders präzises Messergebnis wird dadurch erhalten, dass bei einer bevorzugten Ausführungsform das Messelement und/oder das Heizelement als frei liegende Leiterbahnen auf dem Halbleiterchip ausgebildet ist/sind.

Gegenstand der Erfindung ist ebenfalls ein Verfahren zur Messung des Durchflusses eines Fluids mit einem thermischen Sensor nach einem der vorhergehenden Ansprüche gemäß Anspruch 6.

Bevorzugte Ausführungsformen der Erfindung werden anhand der beigefügten Zeichnungen beschrieben, in denen zeigen:
- Fig. 1: einen thermischen Sensor gemäß einer ersten Ausführungsform,
- Fig. 2: einen thermischen Sensor gemäß einer zweiten Ausführungsform.

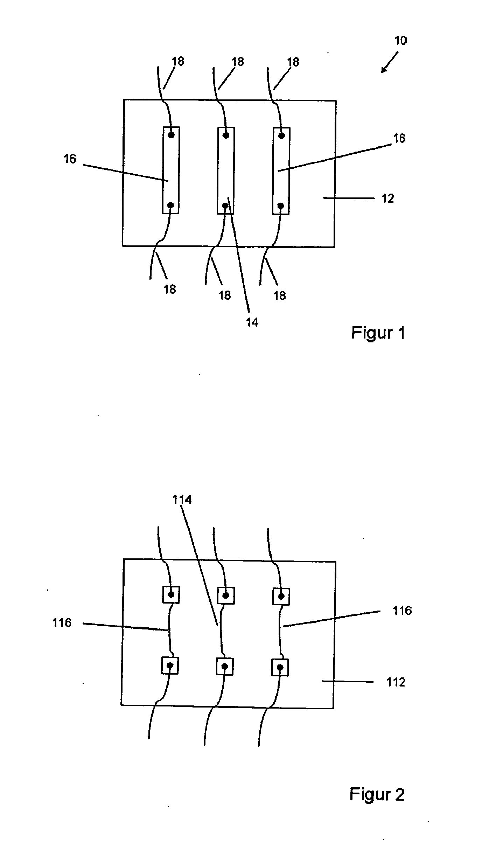

Fig. 1 zeigt einen thermischen Sensor 10, insbesondere für ein thermisches Anemometer. Auf einem Chip 12 beispielsweise aus Silizium ist ein Heizelement 14 angeordnet. In geringem Abstand von dem Heizelement 14 sind beidseitig des Heizelements 14 Messelemente 16 auf dem Chip 12 angeordnet. Das Heizelement 14 und die Messelemente 16 sind monolithisch in dem Chip 12 integriert. Der Abstand zwischen einem Messelement 16 und dem Heizelement 14 beträgt vorzugsweise 10 bis 30 µm. Hierdurch ist eine gute thermische Kopplung zwischen Heizelement 14 und Messelemente 16 gewährleistet, wobei gleichzeitig die Heiz- bzw. Messelemente 14, 16 elektrisch voneinander isoliert sind. Die Messelemente 16 und das Heizelement 14 sind temperaturabhängige Widerstände, die jeweils mit Anschlussleitem 18 elektrisch mit einer nicht dargestellten Stromversorgungseinheit bzw. einer nicht dargestellten Auswerteeinheit verbunden sind.

Der Heizwiderstand 14 ist niederohmig ausgebildet und hat vorzugsweise einen Wert < 100 Ohm. Das Messelement 16 hingegen ist ein möglichst hochohmiger Widerstand, der vorzugsweise einen Wert > 10.000 Ohm aufweist.

Der Wert der Widerstände des Heizelements 14 und der Messelemente 16 lässt sich durch geeignete Dotierung des Chipmaterials erzielen.

Das Heizelement 14 wird von einem Konstantstrom aus einer nicht dargestellten Batterie gespeist, wobei der Heizstrom pulsförmig geschaltet ist. Die Temperatur des Heizelements 14 stellt sich in Abhängigkeit von der Strömungsgeschwindigkeit des zu messenden Mediums ein. Hierbei gilt, dass bei großen Strömungsgeschwindigkeiten die Temperatur des Heizelements kleiner ist als bei kleinen Werten der Strömungsgeschwindigkeit.

Da die Messelemente 16 mit dem Heizelement 14 thermisch gekoppelt sind, erwärmen sich die Messelemente 16 in Abhängigkeit von der Temperatur des Heizelements 14. Die Temperatur der Messelemente 16 beeinflusst den Widerstand der Messelemente 16. Der temperaturabhängige Widerstandswert ist folglich ein Maß für die Strömungsgeschwindigkeit des zu messenden Mediums und somit für den Durchfluss.

Für eine hohe Messauflösung ist es erforderlich, dass die Differenz der messbaren Widerstandswerte der Messelemente 16 bei einer minimalen Strömungsgeschwindigkeit von beispielsweise 0 m/sec und einer maximalen Strömungsgeschwindigkeit möglichst groß ist. Die Differenz der bei minimaler und maximaler Strömungsgeschwindigkeit gemessenen Widerstände hängt im Wesentlichen von der Temperaturdifferenz der Messelemente 16 bei minimaler und maximaler Strömungsgeschwindigkeit ab. Folglich ist eine gute thermische Kopplung zwischen Heizelement 14 und Messelement 16 Voraussetzung für eine hohe Messauflösung. Die thermische Kopplung ist beispielsweise abhängig von dem Abstand des Heizelements 14 von den Messelementen 16 sowie von den Basiswiderständen des Heizelements bzw. der Messelemente 16.

Zur Bestimmung der Strömungsgeschwindigkeit mit Hilfe des erfindungsgemäßen Sensors ist daher ein Kopplungsfaktor vorgesehen. Der Kopplungsfaktor ist ein Maß für die Güte der thermischen Kopplung.

Fig. 2 zeigt eine Ausführungsform, bei der die Wärmekapazität weiter optimiert ist. Die in Fig. 2 dargestellte Ausführungsform unterscheidet sich von der in Fig. 1 dargestellten dadurch, dass das Heizelement 114 und die Messelemente 116 als frei liegende Leiterbahn auf dem Halbleiterchip ausgebildet sind. Die frei liegenden Leiterbahnen sind somit thermisch von dem Chip 112 entkoppelt, so dass keine Wärmeübertragung von den Leiterbahnen zu dem Chip 112 erfolgt.

## Patentansprüche

1. Thermischer Durchflusssensor zur Messung des Durchflusses eines Fluids mit einem Heizelement (14; 114) und einem Messelement (16; 116), wobei das Heizelement (14; 114) und das Messelement (16; 116) auf einem Halbleiterchip (12; 112) angeordnet und thermisch miteinander gekoppelt sind und wobei das Messelement (16; 116) von dem Heizelement (14; 114) erwärmbar ist, **dadurch gekennzeichnet, dass** das Heizelement (14; 114) und das Messelement (16; 116) mit geringem Abstand voneinander angeordnet, auf dem Halbleiterchip (12) monolithisch integriert sind, das Heizelement (14; 114) ein temperaturabhängiger niederohmiger Widerstand und das Messelement (16; 116) ein temperaturabhängiger hochohmiger Widerstand ist.

2. Thermischer Sensor nach Anspruch 1, **dadurch gekennzeichnet, dass** der Abstand zwischen dem Heizelement (14; 114) und dem Messelement (16; 116) im Bereich von etwa 10 bis 30 µm liegt.

3. Thermischer Sensor nach einem der vorhergehenden Ansprüche, **dadurch gekennzeichnet, dass** das Heizelement (14; 114) mit gepulstem Strom beaufschlagt wird.

4. Thermischer Sensor nach einem der vorhergehenden Ansprüche, **dadurch gekennzeichnet, dass** der Widerstand des Messelements (16; 116) und/oder des Heizelements (14; 114) mittels geeigneter Dotierung des Halbleitermaterials einstellbar ist.

5. Thermischer Sensor nach einem der vorhergehenden Ansprüche, **dadurch gekennzeichnet, dass** das Messelement (16; 116) und/oder das Heizelement (14; 114) als freiliegende Leiterbahnen auf dem Halbleiterchip (12; 112) ausgebildet sind.

6. Verfahren zur Messung des Durchflusses eines Fluids mit einem thermischen Sensor nach einem der vorhergehenden Ansprüche, **dadurch gekennzeichnet, dass**
- das Heizelement (14; 114) mit einem gepulsten Strom beaufschlagt wird;
- das Messelement (16; 116) vom Heizelement (14; 114) erwärmt wird;
- die Temperatur des Messelements (16; 116) erfasst wird, wobei die Temperatur des Messelements (16; 116) ein Maß für den Durchfluss des Fluids ist.
